# EUROPÄISCHE PATENTANMELDUNG

(11) **EP 3 159 195 A1**
(43) Veröffentlichungstag der Anmeldung: **26.04.2017**
(21) Anmeldenummer: 15465553.4
(22) Anmeldetag: 21.10.2015
(51) Int. Cl.: B60G 17/016, B60G 17/019, B60W 40/10

(54) **FAHRERASSISTENZVORRICHTUNG FÜR EIN FAHRZEUG SOWIE VERFAHREN ZUM AUSTARIEREN EINER SCHIEFLAGE DES FAHRZEUGS**

(71) Anmelder: Continental Automotive GmbH, 30165 Hannover (DE)
(72) Erfinder: Saad, Kmeid, 300551 Timisoara (RO); Vladaia, Daniel, 300224 Timisoara (RO)
(74) Vertreter: Bobbert, Christiana

(57) **Zusammenfassung**

Es wird eine Fahrerassistenzvorrichtung (1) für ein Fahrzeug (2) vorgeschlagen, mit einer Kameraeinheit (3) zur Aufnahme von mindestens einem Bild (7) des Umgebungsbereichs des Fahrzeugs (2), mit einer Auswerteeinrichtung (4), welche ausgebildet ist, aus dem mindestens einen von der Kameraeinheit (3) aufgenommenen Bild (7) eine Schieflage des Fahrzeugs (2) auszuwerten, mit einer Steuereinrichtung (5), welche bei der durch die Auswerteeinrichtung (4) ausgewerteten Schieflage des Fahrzeugs (2) ausgebildet ist, ein Signal zum Austarieren des Fahrzeugs (2) in eine horizontale Gleichgewichtslage auszugeben.

## Beschreibung

Die Erfindung betrifft eine Fahrerassistenzvorrichtung gemäß dem Oberbegriff des Anspruchs 1. Weiterhin betrifft die Erfindung ein Fahrzeug mit der Fahrerassistenzvorrichtung sowie ein Verfahren zur Auswertung einer Fahrzeuglage des Fahrzeugs.

Aus der Druckschrift DE 10 2009 033 219 A1 ist ein Verfahren zur Ermittlung eines Fahrzeug vorausliegenden Straßenprofils einer Fahrspur anhand von erfassten Bilddaten und/oder erfassten Fahrzeugeigenbewegungsdaten bekannt. Es ist eine Schätzvorrichtung vorgesehen, der die erfassten Bilddaten und/oder die erfassten Fahrzeugeigenbewegungsdaten zugeführt werden, wobei anhand der erfassten Bilddaten und/oder der erfassten Fahrzeugeigenbewegungsdaten ein Straßenhöhenprofil der dem Fahrzeug vorausliegenden Fahrspur ermittelt wird.

Der Erfindung liegt die Aufgabe zugrunde, eine den Fahrkomfort im Fahrzeug verbessernde Fahrerassistenzvorrichtung bereitzustellen.

Diese Aufgabe wird durch eine Fahrerassistenzvorrichtung mit den Merkmalen des Anspruchs 1, durch ein Fahrzeug mit den Merkmalen des Anspruchs 8 sowie durch ein Verfahren mit den Merkmalen des Anspruchs 10 gelöst. Bevorzugte oder vorteilhafte Ausführungsformen der Erfindung sind in den Unteransprüchen, der nachfolgenden Beschreibung und durch die Figuren dargelegt.

Es wird eine Fahrerassistenzvorrichtung für ein Fahrzeug vorgeschlagen. Die Fahrerassistenzvorrichtung weist eine Kameraeinheit zur Aufnahme von mindestens einem Bild eines Umgebungsbereichs des Fahrzeugs auf. Bei dem Umgebungsbereich handelt es sich beispielsweise um einen in Fahrtrichtung des Fahrzeugs vorausliegenden, seitlichen und/oder rückwärtigen Umgebungsbereich. Beispielsweise ist die mindestens eine Kameraeinheit im Innenraum des Fahrzeugs und/oder außenseitig an der Fahrzeugkarosserie anzuordnen bzw. angeordnet. Vorzugsweise weist die Kameraeinheit mindestens eine Optik zur Projektion von Licht sowie mindestens einen Bildsensor wie z. B. einen CMOS-Sensor zur Erfassung des von der Optik projizierten Lichts auf. Die Kameraeinheit kann z. B. mindestens oder genau eine Mono- oder eine Stereokamera umfassen oder als diese ausgebildet sein. Die Kameraeinheit kann auch als Rundumsichtkamerasystem ausgebildet sein, welches durch eine Mehrzahl von Einzelkameras, bevorzugt mit einem großen Öffnungswinkel, eine Erfassung von 360° um das Fahrzeug ermöglicht.

Die Fahrerassistenzvorrichtung umfasst eine Auswerteeinrichtung, welche ausgebildet ist, aus dem mindestens einen von der Kameraeinheit aufgenommenen Bild eine Schieflage des Fahrzeugs auszuwerten. Bei der Schieflage des Fahrzeugs ist insbesondere der Ausgangsschwerpunkt des Fahrzeugs verschoben. Bei dem Ausgangsschwerpunkt handelt es sich insbesondere um den Schwerpunkt des Fahrzeugs in einem unbeladenen Zustand und/oder bei einer Fahrzeuganordnung auf einer horizontal erstreckenden Fahrbahnoberfläche.

Vorzugsweise ist die Auswerteeinrichtung zur Auswertung einer relativen Schieflage des Fahrzeugs zu einer Fahrbahnoberfläche ausgebildet. Insbesondere ist bei der relativen Schieflage der Fahrzeugaufbau des Fahrzeugs um einen Neigungswinkel geneigt. Die relative Schieflage kann beispielsweise durch unterschiedlich schwere Fahrzeuginsassen und/oder durch eine ungleiche Zuladungsverteilung verursacht sein. Alternativ oder optional ergänzend ist die Auswerteeinrichtung ausgebildet, eine durch eine Fahrbahnneigung verursachte Schieflage auszuwerten. Insbesondere ist das Fahrzeug bei der durch eine Fahrbahnneigung verursachten Schieflage um einen Neigungswinkel geneigt.

Bei der Kameraeinheit handelt es sich insbesondere um eine bereits im Fahrzeug vorhandene und für andere Fahrerassistenzfunktionen genutzte Kameraeinheit, welche beispielsweise für die Erfassung weiterer Verkehrsteilnehmer, eine Verkehrszeichenerkennung und/oder eine Trajektorienerkennung eingesetzt wird. Durch das Zurückgreifen auf eine bereits vorhandene Kameraeinheit kann die Anzahl an Sensoriken reduziert und somit eine kosteneffiziente Fahrerassistenzvorrichtung umgesetzt werden.

Weiterhin umfasst die Fahrerassistenzvorrichtung eine Steuereinrichtung, welche bei der durch die Auswerteeinrichtung ausgewerteten Schieflage des Fahrzeugs ausgebildet ist, ein Signal zum Austarieren des Fahrzeugs in eine horizontale Gleichgewichtslage auszugeben. Insbesondere ist durch das ausgegebene Signal das in der relativen Schieflage bzw. das auf der geneigten Fahrbahn befindliche Fahrzeug in die horizontale Gleichgewichtslage überführt. Durch das Austarieren des Fahrzeugs in die horizontale Gleichgewichtslage ist vorzugsweise der Neigungswinkel des Fahrzeugaufbaus kompensiert. Insbesondere ist der aufgrund der Schieflage verschobene Fahrzeugschwerpunkt durch das Austarieren des Fahrzeugs zurück zum Ausgangsschwerpunkt verlagert.

Die Schieflage des Fahrzeugs kann von einem Fahrzeuginsassen aufgrund der sich hierdurch ergebenden geneigten Sitzposition vor allem bei längeren Fahrten als unangenehm empfunden werden. Durch das Austarieren des Fahrzeugs können die auf den Fahrzeuginsassen unangenehm einwirkenden Neigungskräfte ausgeglichen und auf diese Weise ein höherer Fahrkomfort für Fahrzeuginsassen erzielt werden.

Bei einer besonders bevorzugten Ausgestaltung ist die Steuereinrichtung ausgebildet, zum Austarieren des Fahrzeugs in die horizontale Gleichgewichtslage ein Signal an ein Fahrwerk, insbesondere an eine Federeinheit des Fahrzeugs auszugeben. Zur Ausgabe des Signals sind die Steuereinrichtung und das Fahrwerk, insbesondere die Federeinheit über ein Fahrzeugnetzwerk wie z. B. einem Bussystem miteinander verbindbar bzw. verbunden. Beispielsweise umfasst die Federeinheit an jedem Fahrzeugrad eine Federungseinrichtung, wobei mittels des von der Steuereinrichtung ausgegebenen Signal die Fluidzufuhr und/oder -abfuhr der jeweiligen Federungseinrichtung angesteuert und auf diese Weise einen Niveauausgleich und folglich das Austarieren des Fahrzeugs umgesetzt ist. Insbesondere erfolgt durch das Ansteuern der Federeinheit eine Anhebung des Fahrzeugaufbaus auf der abfallenden Neigungsrichtung. Somit wird insbesondere der Fahrzeugaufbau hinsichtlich seiner Neigung durch die Federeinheit derart verstellt, dass die horizontale Gleichgewichtslage hergestellt ist.

Zur Auswertung der Schieflage des Fahrzeugs ist die Auswerteeinrichtung insbesondere zur Bestimmung eines aktuellen Roll- und/oder Nickwinkels des Fahrzeugs aus dem mindestens einen aufgenommenen Bild ausgebildet. Unter dem Rollwinkel ist insbesondere eine Neigung des Fahrzeugs um eine Fahrzeuglängsachse zu verstehen. Unter dem Nickwinkel ist insbesondere eine Neigung entlang einer Fahrzeugquerachse zu verstehen. Beispielsweise kann der Rollwinkel aus mindestens einem Bild des seitlich aufgenommenen Umgebungsbereichs und/oder der Nickwinkel aus mindestens einem Bild des vorderseitig aufgenommenen Umgebungsbereichs bestimmt sein. Insbesondere kann mittels des ermittelten Roll- und Nickwinkels die Neigungsrichtung und folglich die Schieflage des Fahrzeugs ausgewertet werden.

Zur Bestimmung des Roll- und/oder des Nickwinkels ist die Auswerteeinrichtung insbesondere ausgebildet, mindestens ein statisches Zielobjekt mit einem bekannten Richtungsverlauf auszuwerten. So können z. B. eine Straßenlaterne, ein Pfosten, ein Baumstamm, eine Hauswand-Ecke und/oder ein Horizont durch die Auswerteeinrichtung als ein mögliches Zielobjekt ausgewertet sein. Insbesondere befindet sich die Kameraeinheit durch eine ortsfeste Anordnung im Fahrzeug im Falle einer Schieflage des Fahrzeugs in der gleichen Schieflage. Der Roll- und/oder der Nickwinkel sind insbesondere durch die in der gleichen Schieflage aufgenommenen Zielobjekte in dem mindestens einen aufgenommenen Bild auswertbar. So können der Roll- und/oder der Nickwinkel beispielsweise durch die Auswertung eines abweichenden Richtungsverlaufs des ermittelten statischen Zielobjekts bestimmt werden.

Vorzugsweise ist die Auswerteeinrichtung ausgebildet, den aus dem mindestens einen aufgenommenen Bild ausgewerteten Roll- und/oder Nickwinkel mit mindestens einem vordefinierten Referenzwinkel oder einem vordefinierten Referenzwinkelbereich zu vergleichen. Vorzugsweise ist bei einer Überschreitung des vordefinierten Referenzwinkels bzw. des Referenzwinkelbereichs die Schieflage des Fahrzeugs ausgewertet.

Besonders bevorzugt ist die Steuereinrichtung ausgebildet, ein Signal zur Anpassung des Nick- und/oder des Rollwinkels auszugeben, sodass der Fahrzeugaufbau des Fahrzeugs in die Ausgangslage verstellt und somit das Fahrzeug in die horizontale Gleichgewichtslage austariert ist.

Zur Auswertung der Schieflage kann alternativ oder optional ergänzend vorgesehen sein, dass eine relative Höhenlage des Fahrzeugs zur Fahrbahnoberfläche ausgewertet ist. So ist es beispielsweise möglich, einen Höhenabstand des Fahrzeugspiegels zur Fahrbahnoberfläche auszuwerten. Durch einen Vergleich des ausgewerteten Höhenabstands mit einer in einer Datenbank hinterlegten Referenzhöhe oder einem Referenzhöhenbereich kann bei einer Überschreitung die Schieflage des Fahrzeugs ausgewertet sein.

Gemäß einer besonders bevorzugten Ausgestaltung ist die Steuereinrichtung ausgebildet, das Signal auszugeben, sollte eine konstante Schieflage innerhalb eines vorgebbaren bzw. vorgegebenen Zeitintervalls durch die Auswerteeinrichtung ausgewertet worden sein. Unter der konstanten Schieflage ist insbesondere eine innerhalb des vorgebbaren bzw. vorgegebenen Zeitintervalls gleichbleibende, somit kontinuierliche Schieflage zu verstehen. Vorzugsweise sind zur Bestimmung der konstanten Schieflage eine konstante Neigungsrichtung, insbesondere ein konstanter Nick- und/oder Rollwinkel in mindestens zwei innerhalb des vorgebbaren bzw. vorgegebenen Zeitintervalls aufgenommenen Bildern ermittelt. Bei dem vorgegebenen Zeitintervall handelt es sich beispielsweise um mindestens fünf Sekunden, insbesondere um mindestens zehn Sekunden, im Speziellen um mindestens 30 Sekunden. Vorteilhaft werden auf diese Weise längerfristige, das Neigungsverhalten beinflussende Faktoren wie z. B. eine ungleichmäßige Ladungsverteilung im Fahrzeug ausgeglichen. Weiterhin ist insbesondere das Austarieren einer fahrdynamischen Schieflage des Fahrzeugs ausgeschlossen. Auf diese Weise ist gewährleistet, dass eine direkte Rückmeldung über die auftretenden fahrdynamischen Kräfte wie z. B. zur Fahrzeugbeschleunigung, Fahrzeugverzögerung, Querbeschleunigung und/oder zu einem Schwimmwinkel aufrechterhalten bleibt und somit für den Fahrer eine Beurteilung des aktuellen fahrdynamischen Zustands sichergestellt ist.

Da eine Schieflage des Fahrzeugs auch durch einen Reifen mit einem zu niedrigen Reifendruck resultieren kann, ist die Steuereinrichtung vorzugsweise mit einer an mindestens einem Reifen des Fahrzeugs angeordneten Reifenluftdrucksensoreinheit verbindbar oder verbunden, welche zur Auswertung des Reifendrucks ausgebildet ist. Insbesondere ist die Steuereinrichtung ausgebildet, bei einem durch die Reifenluftdrucksensoreinheit ausgewerteten zu niedrigen Reifenluftdruck von mindestens einem der vier Reifen die Ausgabe des Signals zum Austarieren des Fahrzeugs auszuschließen. Auf diese Weise ist sichergestellt, dass Rückmeldekräfte zum Reifenzustand des Fahrzeugs weiterhin uneingeschränkt an den Fahrer übermittelt sind.

Einen weiteren Gegenstand der Erfindung betrifft ein Fahrzeug mit der Fahrerassistenzvorrichtung nach der vorhergehenden Beschreibung. Vorzugsweise umfasst das Fahrzeug das Fahrwerk, insbesondere die Federeinheit, wobei die Steuereinrichtung insbesondere zum Austarieren des Fahrzeugs zur Ausgabe des Signals z. B. über das Fahrzeugnetzwerk mit dem Fahrwerk, insbesondere der Federeinheit verbunden ist. Optional ergänzend umfasst das Fahrzeug die Reifenluftdrucksensoreinheit.

Ferner betrifft die Erfindung ein Verfahren zur Auswertung einer Schieflage eines Fahrzeugs. Es wird von einer Kameraeinheit mindestens ein Bild eines Umgebungsbereichs des Fahrzeugs aufgenommen. In einem weiteren Schritt wird von einer Auswerteeinrichtung die Schieflage des Fahrzeugs aus dem mindestens einen Bild ausgewertet. Beispielsweise kann vorgesehen sein, dass mindestens zwei parallel aufgenommene Bilder von zwei verschiedenen Einzelkameras mit einer unterschiedlichen Blickrichtung ausgewertet werden, um insbesondere eine Neigungsrichtung dreidimensional zu erfassen. Insbesondere wird der Nick- und/oder der Rollwinkel des Fahrzeugs ausgewertet. Alternativ oder optional ergänzend wird mittels der zwei parallel aufgenommenen Bilder die aus dem einen Bild ausgewertete Schieflage durch die ausgewertete Schieflage aus dem weiteren, parallel aufgenommenen Bild validiert. Bei der durch die Auswerteeinrichtung ausgewerteten Schieflage wird ein Signal durch eine Steuereinrichtung zum Austarieren des Fahrzeugs in eine horizontale Gleichgewichtslage ausgegeben.

Weitere Merkmale, Vorteile und Wirkungen der Erfindung ergeben sich aus der nachfolgenden Beschreibung bevorzugter Ausführungsbeispiele der Erfindung. Dabei zeigen:
- Figur 1: in einer schematischen Darstellung eine Fahrerassistenzvorrichtung eines Fahrzeugs;
- Figur 2a: das Fahrzeug aus Figur 1 in einer durch eine Fahrbahnneigung verursachten Schieflage;
- Figur 2b: das Fahrzeug aus Figur 1 in eine auf der geneigten Fahrbahn überführte horizontale Gleichgewichtslage;
- Figur 3: das Fahrzeug aus Figur 1 in einer relativen Schieflage;
- Figuren 4a, 4b: die Erfassung einer Neigungsrichtung des Fahrzeugs 2 aus Figur 1 mittels eines durch eine Kameraeinheit aufgenommenen Bilds;
- Figur 5: einen Verfahrensablauf zum Austarieren einer Schieflage des Kraftfahrzeugs aus Figur 1.

Einander entsprechende Teile sind in allen Figuren jeweils mit den gleichen Bezugszeichen versehen.

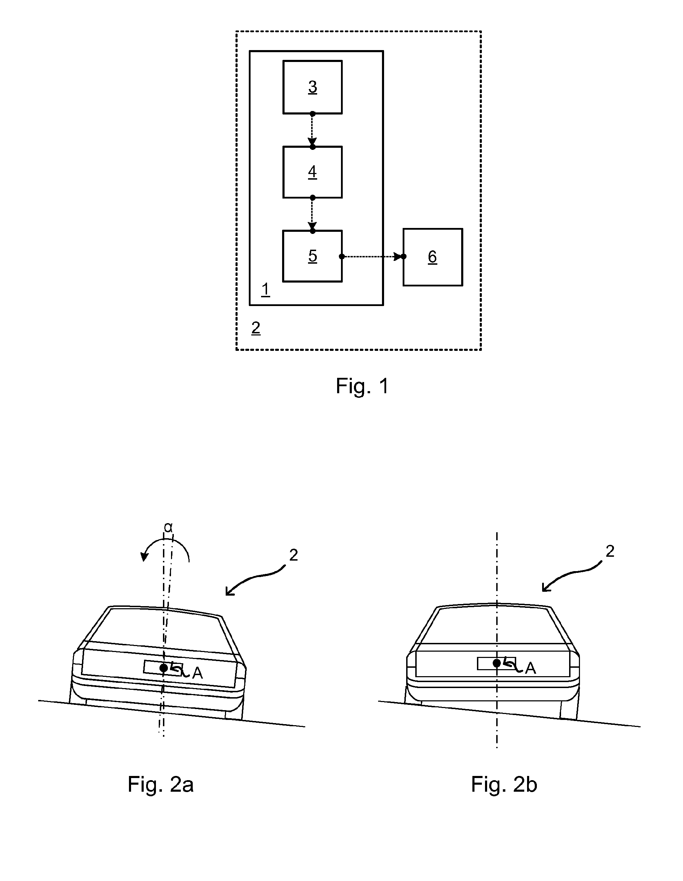

Figur 1 zeigt in einer schematischen Darstellung eine Fahrerassistenzvorrichtung 1 eines Fahrzeugs 2. Die Fahrerassistenzvorrichtung 1 umfasst eine Kameraeinheit 3, welche zur Aufnahme mindestens eines Bilds eines Umgebungsbereichs des Fahrzeugs 2 ausgebildet ist. Bei dem Umgebungsbereich handelt es sich beispielsweise um den Fahrzeugvorderbereich und/oder den Fahrzeugseitenbereich. Weiterhin umfasst die Fahrerassistenzvorrichtung 1 eine Auswerteeinrichtung 4, wobei die Kameraeinheit 3 mit der Auswerteeinrichtung 4 zur Übermittlung des mindestens einen aufgenommenen Bilds verbunden ist.

Die Auswerteeinrichtung 4 ist ausgebildet, aus dem mindestens einen von der Kameraeinheit 3 übermittelten Bild eine Schieflage des Fahrzeugs 2 auszuwerten. Die Fahrerassistenzvorrichtung 1 umfasst eine Steuereinrichtung 5, wobei die Auswerteeinrichtung 4 mit der Steuereinrichtung 5 zur Übermittlung der ausgewerteten Schieflage verbunden ist. Die Steuereinrichtung 5 ist ausgebildet, das Fahrzeug 2 bei einer durch die Auswerteeinrichtung 4 ausgewerteten Schieflage des Fahrzeugs 2 in eine horizontale Gleichgewichtslage auszutarieren. Bei dem Austarieren des Fahrzeugs 2 erfolgt insbesondere ein Ausgleich einer Fahrzeugneigung. Mit anderen Worten erfolgt insbesondere ein Ausbalancieren der Schieflage des Fahrzeugs 2, sodass der Ausgangsschwerpunkt des Fahrzeugs wieder hergestellt ist. Durch das Austarieren des Fahrzeugs 2 in die horizontale Gleichgewichtslage soll eine Verbesserung des Fahrkomforts für die Fahrzeuginsassen umgesetzt werden.

Beispielsweise umfasst das Fahrzeug 2 eine Federeinheit 6, mittels dieser ein Austarieren des Fahrzeugs 2 in die horizontale Gleichgewichtslage möglich ist. Die Steuereinrichtung 5 ist zur Ausgabe des Signals mit der Federeinheit 6 z. B. über ein Fahrzeugnetzwerk verbunden. Insbesondere umfasst die Federeinheit 6 an den Fahrzeugrädern jeweils eine Federeinrichtung, welche durch die Steuereinrichtung 5 gesondert zur Absenkung bzw. Anhebung des Niveaus des Fahrzeugaufbaus an dem jeweiligen Fahrzeugrad angesteuert werden können.

Bei der Schieflage des Fahrzeugs 2 kann es sich beispielsweise um eine durch eine Fahrbahnneigung verursachte Schieflage handeln, wie in Figur 2a dargestellt. Somit ist das Fahrzeug 2 aufgrund eines Gefälles geneigt. Rein beispielhaft ist hier eine quer zur Fahrzeuglängsachse A abfallende Fahrbahn gezeigt, sodass das Fahrzeug um einen Rollwinkel α geneigt ist. Durch das durch die Steuereinrichtung 5 ausgegebene Signal ist die Federeinheit 6 ausgebildet, den Fahrzeugaufbau des Fahrzeugs 2 derart anzuheben, dass das Fahrzeug 2 von der Schieflage in die horizontale Gleichgewichtslage durch die Kompensation des Rollwinkels α austariert ist, wie in Figur 2b gezeigt.

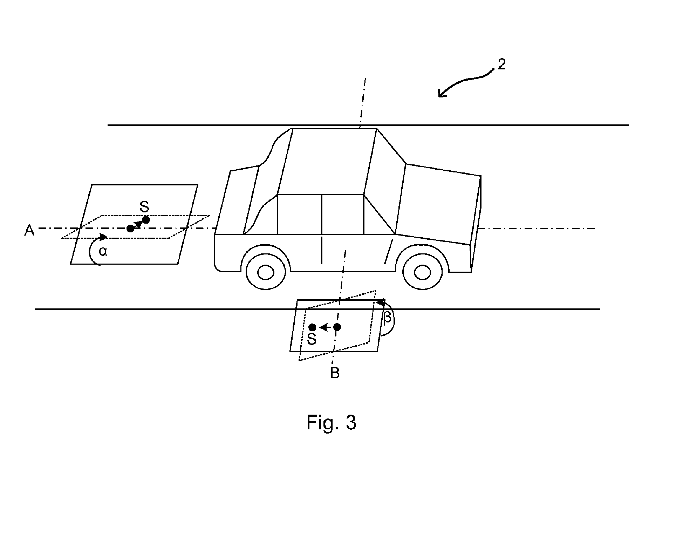

Wie in Figur 3 dargestellt, kann es sich bei der Schieflage alternativ um eine relative Schieflage des Fahrzeugs 2 zur Fahrbahnoberfläche handeln, welche beispielsweise durch eine ungleichmäßige, insbesondere einseitige Beladung des Fahrzeugs 2 verursacht ist. Somit ist die Fahrzeuglage des Fahrzeugs 2 relativ zur Fahrbahnoberfläche ausgehend von einer Ausgangslage des Fahrzeugs 2 verändert. Unter der Ausgangslage ist insbesondere das Fahrzeug 2 im unbeladenen Zustand, somit ohne Zuladung und auf einer sich horizontal erstreckenden Fahrbahnoberfläche verstehen. In Figur 3 ist exemplarisch eine relative Schieflage des Fahrzeugs 2 um die Fahrzeuglängsachse A und um eine Fahrzeugquerachse B dargestellt. Das Fahrzeug 2 ist um die Fahrzeuglängsachse A um den Rollwinkel α nach links geneigt, wie schematisch durch den verlagerten Schwerpunkt S und die zur Ausgangsebene geneigte Ebene (gestrichelte Ebene) gezeigt. Weiterhin ist das Fahrzeug 2 um die Fahrzeugquerachse B um den Nickwinkel β nach hinten geneigt, wie durch den verlagerten Schwerpunkt S und die zur Ausgangsebene geneigte Ebene (gestrichelte Ebene) gezeigt. Somit entsprechen die Ausgangsebenen insbesondere der horizontalen Gleichgewichtslage.

Zur Auswertung der Schieflage des Fahrzeugs 2 ist die Auswerteeinrichtung 4 ausgebildet, eine Neigungsrichtung des Fahrzeugs 2 aus dem mindestens einen aufgenommenen Bild zu bestimmen. Vorteilhaft ist es beispielsweise mittels des bestimmten Roll- und Nickwinkels α, β möglich, die Neigungsrichtung und somit die Schieflage des Fahrzeugs 2 auszuwerten. Somit können der bestimmte Roll- und/oder des Nickwinkels α, β durch die Ansteuerung der Federeinheit 6 kompensiert und folglich das Austarieren in die horizontale Gleichgewichtslage erfolgen.

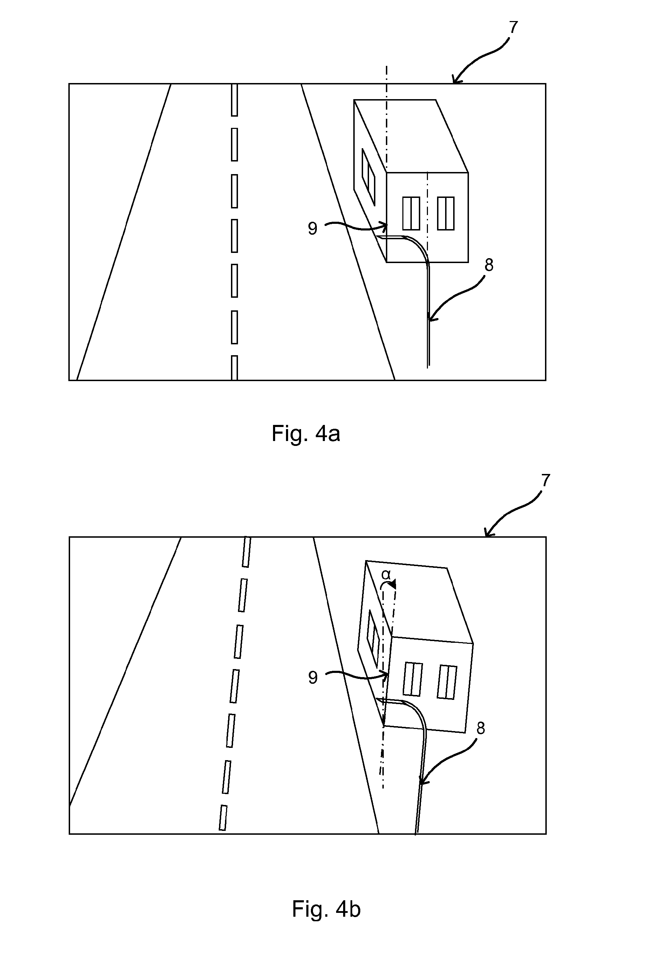

Figur 4a zeigt rein beispielhaft ein durch die Kameraeinheit 3 aufgenommenes Bild 7, mittels diesem die Auswerteeinrichtung 4 zur Auswertung der Schieflage des Fahrzeugs 2 ausgebildet ist. Die Kameraeinheit 3 ist in ihrer Lage ortsfest, somit im Speziellen um eine Rotations-, Längs-, Querachse und sonstigen Achsen bewegungsfrei im Fahrzeug 2 integriert. Somit befindet sich die Kameraeinheit 3 im Falle einer Schieflage des Fahrzeugs 2 in der gleichen Schieflage. Die Auswerteeinrichtung 4 ist ausgebildet, mindestens ein statisches Zielobjekt mit einem bekannten Richtungsverlauf zu ermitteln. Hier sind exemplarisch eine Straßenlaterne 8 sowie eine Hausecke 9 gezeigt, welche beide jeweils einen charakteristischen vertikalen Richtungsverlauf aufweisen. Das Fahrzeug 2 befindet sich in Figur 4a in der horizontalen Gleichgewichtslage, sodass der vertikale Richtungsverlauf vorliegt. In Figur 4b hingegen ist das Fahrzeug 2 um die Fahrzeuglängsachse A geneigt, sodass der Richtungsverlauf der Straßenlaterne 8 und Hausecke 9 in dem Bild 7 verändert sind.

Durch die Auswertung des abweichenden Richtungsverlaufs kann z. B. der Rollwinkel α bestimmt und somit die Schieflage des Fahrzeugs 2 ausgewertet werden. In diesem Zusammenhang sei noch angemerkt, dass im Falle von Weitwinkelobjekten, bei denen Verzeichnungen vor allem im Bildrand vorliegen können, beispielsweise die Auswertung eines entzeichneten Bildes 7 erfolgt, um den korrekten Richtungsverlauf zu ermitteln.

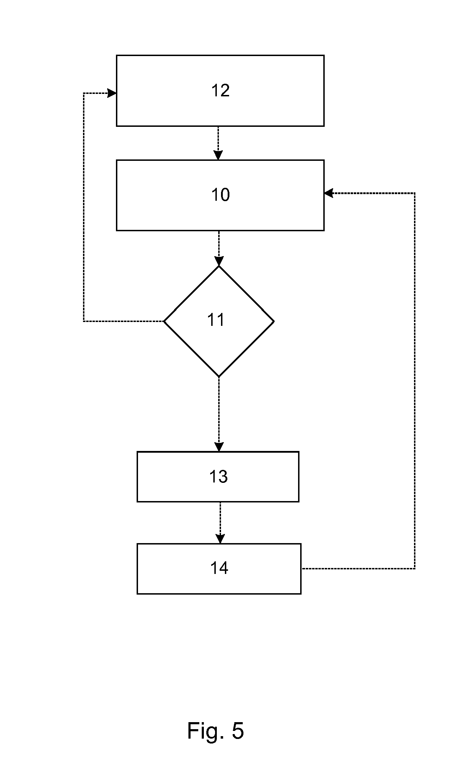

Figur 5 zeigt einen beispielhaften Verfahrensablauf zur Auswertung der Schieflage sowie zum Austarieren des Fahrzeugs 2 von der Schieflage in die horizontale Gleichgewichtslage.

Es erfolgt die Auswertung des Roll- und des Nickwinkels α, β aus dem mindestens einen von der Kameraeinheit 3 aufgenommenen Bild 10. Der ausgewertete Roll- und Nickwinkel α, β werden von der Auswerteeinrichtung 4 mit mindestens einem vordefinierten Referenzwinkel oder einem vordefinierten Referenzwinkelbereich verglichen 11. Liegt der ausgewertete Roll- und Nickwinkel α, β unterhalb des vordefinierten Referenzwinkels bzw. innerhalb des Referenzwinkelbereichs, wird die horizontale Gleichgewichtslage des Fahrzeugs 2 durch die Auswerteeinrichtung 4 ausgewertet 12. Liegt eine Überschreitung des vordefinierten Referenzwinkels bzw. des Referenzwinkelbereichs vor, wird hingegen die Schieflage des Fahrzeugs 2 durch die Auswerteeinrichtung 4 ausgewertet 13. Optional ergänzend werden fahrdynamische Kräfte ausgewertet und an die Auswerteeinrichtung 4 für die Auswertung der Schieflage übermittelt. Bei einer durch die Auswerteeinrichtung 4 ausgewerteten Schieflage gibt die Steuereinrichtung 5 das Signal zum Austarieren des Fahrzeugs 2 an die Federeinheit 6 aus 14. Die Ansteuerung der Federeinheit 6 durch die Steuereinrichtung 5 erfolgt bis die Auswerteeinrichtung 4 die horizontale Gleichgewichtslage des Fahrzeugs 2 ausgewertet hat.

### Bezugszeichenliste:

- 1: Fahrerassistenzvorrichtung
- 2: Fahrzeug
- 3: Kameraeinheit
- 4: Auswerteeinrichtung
- 5: Steuereinrichtung
- 6: Federeinheit
- 7: Bild
- 8: Straßenlaterne
- 9: Hausecke
- 10: Auswertung des Roll- und/oder des Nickwinkels α, β
- 11: Vergleich des Roll- und/oder des Nickwinkel mit einem Referenzwinkel oder Referenzwinkelbereich
- 12: Ausgewertete horizontale Gleichgewichtslage des Fahrzeugs
- 13: Ausgewertete Schieflage des Fahrzeugs
- 14: Ausgabe des Signals zum Austarieren des Fahrzeugs
- α: Rollwinkel
- β: Nickwinkel
- S: Verlagerter Schwerpunkt

## Patentansprüche

1. Fahrerassistenzvorrichtung (1) für ein Fahrzeug (2)
mit einer Kameraeinheit (3) zur Aufnahme von mindestens einem Bild (7) eines Umgebungsbereichs des Fahrzeugs (2),
mit einer Auswerteeinrichtung (4), welche ausgebildet ist, aus dem mindestens einen von der Kameraeinheit (3) aufgenommenen Bild (7) eine Schieflage des Fahrzeugs (2) auszuwerten,
mit einer Steuereinrichtung (5), welche bei der durch die Auswerteeinrichtung (4) ausgewerteten Schieflage des Fahrzeugs (2) ausgebildet ist, ein Signal zum Austarieren des Fahrzeugs (2) in eine horizontale Gleichgewichtslage auszugeben.

2. Fahrerassistenzvorrichtung (1) nach Anspruch 1, wobei zur Auswertung der Schieflage ein Roll- und/oder ein Nickwinkel (α, β) des Fahrzeugs (2) aus dem mindestens einen aufgenommenen Bild (7) bestimmt sind.

3. Fahrerassistenzvorrichtung (1) nach Anspruch 2, wobei der Roll- und/oder der Nickwinkel (α, β) aus dem mindestens einen aufgenommenen Bild (7) mittels der Auswertung von mindestens einem statischen Zielobjekt (8, 9) mit einem bekannten Richtungsverlauf bestimmt sind.

4. Fahrerassistenzvorrichtung (1) nach einem der vorhergehenden Ansprüche, wobei die Steuereinrichtung (5) ausgebildet ist, das Signal auszugeben, sollte eine konstante Schieflage innerhalb eines vorgegebenen Zeitintervalls durch die Auswerteeinrichtung (4) ausgewertet worden sein.

5. Fahrerassistenzvorrichtung (1) nach Anspruch 4, wobei die konstante Schieflage ausgewertet ist, sollte ein konstanter Nick- und/oder des Rollwinkel (α, β) in mindestens zwei innerhalb des vorgegebenen Zeitintervalls aufgenommenen Bildern (7) ermittelt worden sein.

6. Fahrerassistenzvorrichtung (1) nach einem der vorhergehenden Ansprüche 2 bis 5, wobei die Steuereinrichtung (5) zum Austarieren des Fahrzeugs (2) in die horizontale Gleichgewichtslage ausgebildet ist, ein Signal zur Anpassung des Nick- und/oder des Rollwinkels (α, β) auszugeben.

7. Fahrerassistenzvorrichtung (1) nach einem der vorhergehenden Ansprüche, wobei die Steuereinrichtung (5) mit einer an mindestens einem Reifen des Fahrzeugs (2) angeordneten Reifenluftdrucksensoreinheit verbindbar ist, wobei die Steuereinrichtung (5) ausgebildet ist, bei einem durch eine Reifenluftdrucksensoreinheit ausgewerteten zu niedrigen Reifenluftdruck von mindestens einem Reifen die Ausgabe des Signals zum Austarieren des Fahrzeugs auszuschließen.

8. Fahrzeug (2) mit der Fahrerassistenzvorrichtung (1) nach einem der vorhergehenden Ansprüche zum Austarieren des Fahrzeugs (2) nach einem der vorhergehenden Ansprüche.

9. Fahrzeug nach Anspruch 8, wobei das Fahrzeug (2) eine Federeinheit (6) umfasst, wobei die Steuereinrichtung (5) zum Austarieren des Fahrzeugs (2) in die horizontale Gleichgewichtslage ausgebildet ist, das Signal an die Federeinheit (6) auszugeben.

10. Verfahren zum Austarieren einer Schieflage eines Fahrzeugs (2), umfassend die Schritte:
- Aufnahme von mindestens einem Bild (7) eines Umgebungsbereichs des Fahrzeugs (2),
- Auswertung einer Schieflage des Fahrzeugs (2) aus dem mindestens einen aufgenommenen Bild (7),
- Ausgabe eines Signals zum Austarieren des Fahrzeugs (2) in eine horizontale Gleichgewichtslage.
